# EUROPEAN PATENT APPLICATION

(11) **EP 2 933 897 A1**
(43) Date of publication of application: **21.10.2015**
(21) Application number: 14172131.6
(22) Date of filing: 12.06.2014
(51) Int. Cl.: H02J 7/00

(54) **Charging and discharging system among two portable devices**

(30) Priority: 17.04.2014 TW 103114006
(71) Applicant: Giga-Byte Technology Co., Ltd., New Taipei City 231 (TW)
(72) Inventor: Ma, Mou-Ming, 231 New Taipei City (TW)
(74) Representative: Schwerbrock, Florian

(57) **Abstract**

A charging and discharging system (1000) is used for charging power to, or obtaining power from, a second portable electronic device (200). The system (1000) includes a power transmission interface (300) and a first portable device (100). The power transmission interface (300) includes a first power node (310) and a second power node (320), where the second power node (320) establishes a power transmission connection to the second portable electronic device (200). The first portable electronic device (100) includes a first data processing module (110), a first memory module (120), a first internal power reservoir (130), a first power management module (140), and a first power transmission port (150). The first power management module (140), controlled by the first data processing module (110), determines that the current passing the first power management module (140) is from the first power node (310) to the first internal power reservoir (130) or from the first internal power reservoir (130) to the first power node (310).

## Description

### TECHNICAL FIELD

The present disclosure relates to a power management system of a portable electronic device and, more particularly, to a charging and discharging system and method among two portable electronic devices and a power transmission interface.

### BACKGROUND ART

The power to a portable electronic device is mainly provided through an internal power reservoir (i.e., a secondary battery or a super capacitor). The internal power reservoir, however, has a limitation on its power capacity. When the internal power reservoir of a portable electronic device runs low, one has to resort to an external power source for supplying power to the portable electronic device and, at the same time, charging power to the internal power reservoir.

A mobile power bank with high power capacity has been widely served as an external power source for supplying power to portable electronics as well as charging power to internal power reservoirs, especially in the situation when one is away from home and cannot access the AC household power.

On many occasions, people may carry multiple portable electronics and leave mobile power banks or AC/DC adapters at home. It may happen that the portable electronic device in use is low in power, while other portable electronic devices not in use, or idling, are fully charged. Unless all the portable electronics use the same type internal power reservoir and the power reservoirs are dismountable, the portable electronics fully charged but not in use cannot provide power to other portable devices having low electric power.

### SUMMARY OF THE INVENTION

The present disclosure provides a charging and discharging system among two portable electronic devices, a method using the same, and a power transmission interface, so as for the two portable electronic devices to supply power to each other.

This disclosure provides a charging and discharging system for charging a second portable electronic device, or obtaining power from the second portable electronic device. The charging and discharging system includes a power transmission interface and a first portable electronic device.

The power transmission interface includes a first power node and a second power node, where the second power node establishes a power transmission connection to the second portable electronic device.

The first portable electronic device at least includes a first data processing module, a first memory module, a first internal power reservoir, a first power management module, and a first power transmission port.

The first data processing module is used for processing data. The first memory module electrically connects to the first data processing module and stores a setting for charging management. The first internal power reservoir is used for supplying power to the first data processing module and the first memory module. The first power management module, disposed between the first power transmission port and the first internal power reservoir, is used for detecting the power capacity associated with the first internal power reservoir. The first power transmission port and the first power node establish a power transmission connection to the first portable electronic device.

The first power management module is controlled by the first data processing module so as to determine that the current passing the first power management module is from the first power node to the first internal power reservoir or from the first internal power reservoir to the first power node.

In one embodiment, the power transmission interface is a conductive wire, where the first power node and the second power node are a first electrical connector and a second electrical connector, respectively.

In one embodiment, the power transmission interface includes a transmission cable, a first wireless charging dock, and a second wireless charging dock. The first wireless charging dock, on which the first portable electronic device is placed, includes a first inductive coil serving as the first power node. The second wireless charging dock, on which the second portable electronic device is placed, includes a second inductive coil serving as the second power node. The first inductive coil electrically connects to the second inductive coil via the transmission cable. The first portable electronic device further includes a device inductive coil serving as the first power transmission port, and the device inductive coil and the first inductive coil magnetically induce each other.

In one embodiment, the power transmission interface includes a first electrical connector and a second electrical connector. The first electrical connector, serving as the first power node, is disposed on the first portable electronic device. The second electrical connector, serving as the second power node, is disposed on the second portable electronic device. The first electrical connector and the second electrical connector are for being connected to each other.

This disclosure also provides a charging and discharging method. The charging and discharging method, which applies to a first portable electronic device to charge power to, or obtain power from, a second portable electronic device, includes the following steps:

(a) Provide a power transmission interface including a first power node and a second power node, where the first power node establishes a power transmission connection to the first portable electronic device, and the second power node establishes a power transmission connection to the second portable electronic device.

(b) Obtain the power capacity of the first portable electronic device and the second portable electronic device by a power management module.

(c) Compare the power capacity between the first portable electronic device and the second portable electronic device by a first data processing module.

(d) If the power capacity of the first portable electronic device is less than that of the second portable electronic device, the first power management, controlled by the first data processing module, determines that the current passing the first power management module is from the first power node so as to charge the first portable electronic device. If the power capacity of the first portable electronic device is more than that of the second portable electronic device, the first power management module, controlled by the first data processing module, determines that the current passing the first portable electronic device is from the first power node to the second power node so as to charge the second portable electronic device.

In one embodiment, the method further includes a step to determine if a command for forced one-way charging is provided; and if the command is provided, force the first portable electronic device to charge power to the second portable electronic device.

In one embodiment, the method further includes a step to determine if a command for forced one-way receiving is provided; and if the command is provided, force the second portable electronic device to charge power to the first portable electronic device.

This disclosure further provides a power transmission interface for charging and discharging among two portable electronic devices. The first portable electronic device and the second portable electronic device charge power to each other via the power transmission interface. The first portable electronic device and the second portable electronic device are provided with a first internal power reservoir and a second internal power reservoir, respectively. The power transmission interface includes a first power node, a second power node, a data processing device, a memory module, and a power management module.

The first power node establishes a power transmission connection to the first internal power reservoir. The second power node establishes a power transmission connection to the second internal power reservoir. The data processing module is used for processing data. The memory module electrically connects to the data processing module and stores a setting for charging management. The power management module electrically connects to the first power node and the second power node and is used to detect the power capacity of the first internal power reservoir and the second internal power reservoir.

The power management module is controlled by the data processing module to determine that the current passing is from the first internal power reservoir to the second internal power reservoir or from the second internal power reservoir to the first internal power reservoir.

In one embodiment, the first power node and the second power node are a first electrical connector and a second electrical connector, respectively.

In one embodiment, the power transmission interface includes a first wireless charging dock and a second wireless charging dock. The first wireless charging dock, on which the first portable electronic device is placed, includes a first inductive coil serving as the first power node. The second wireless charging dock, on which the second portable electronic device is placed, includes a second inductive coil serving as the second power node. The first portable electronic device and the second portable electronic device each further includes a device inductive coil, and the device inductive coils magnetically induce the first inductive coil and the second inductive coil, respectively.

The present disclosure provides a system, a method, and a power transmission interface for charging and discharging among two portable electronic devices, not only to serve as an emergency backup power, but to effectively utilize power in a fully-charged portable electronic device.

### BRIEF DESCRIPTION OF DRAWINGS

The structure as well as a preferred mode of use, further objects, and advantages of this disclosure will be best understood by referring to the following detailed description of some illustrative embodiments in conjunction with the accompanying drawings, in which:
FIG. 1 is a circuit block diagram of a charging and discharging system according to the first embodiment of this disclosure;
FIG. 2 is a circuit block diagram of a first portable electronic device according to the first embodiment of this disclosure, showing a connection of the first portable electronic device, the power transmission interface, and the second portable electronic device;
FIG. 3 is a circuit block diagram of a second portable electronic device according to the first embodiment of this disclosure, showing a connection of the second portable electronic device, the power transmission interface, and the first portable electronic device;
FIG. 4 is a circuit block diagram of a power transmission interface according to the first embodiment of this disclosure;
FIG. 5 is a flowchart of a charging and discharging method of this disclosure;
FIG. 6 is a circuit block diagram showing a connection of the first portable electronic device, the second portable electronic device, and the power transmission interface, according to the second embodiment of this disclosure;
FIG. 7 is a circuit block diagram showing a connection of the first portable electronic device, the second portable electronic device, and the power transmission interface, according to the third embodiment of this disclosure; and
FIG. 8 is a circuit block diagram of a power transmission interface according to the fourth embodiment of this disclosure, showing a connection of the power transmission interface, the first portable electronic device, and the second portable electronic device.

### DETAILED DESCRIPTION OF THE PREFERRED EMBODIMENTS

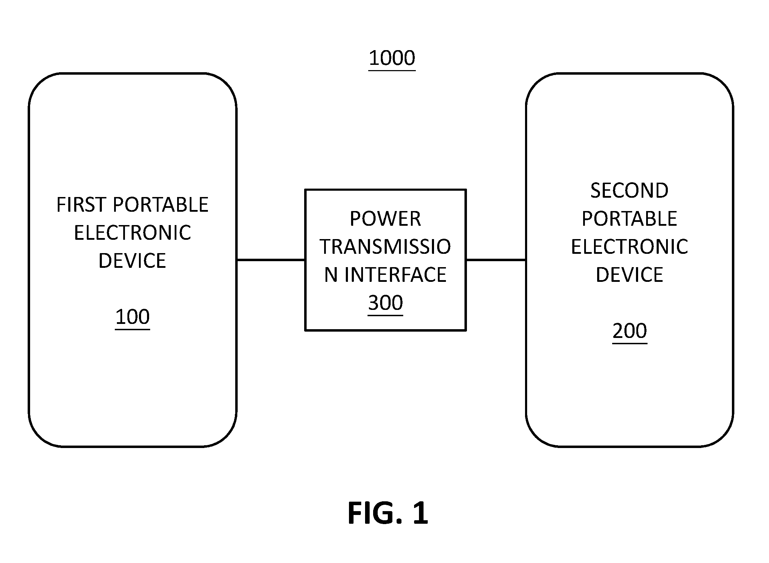

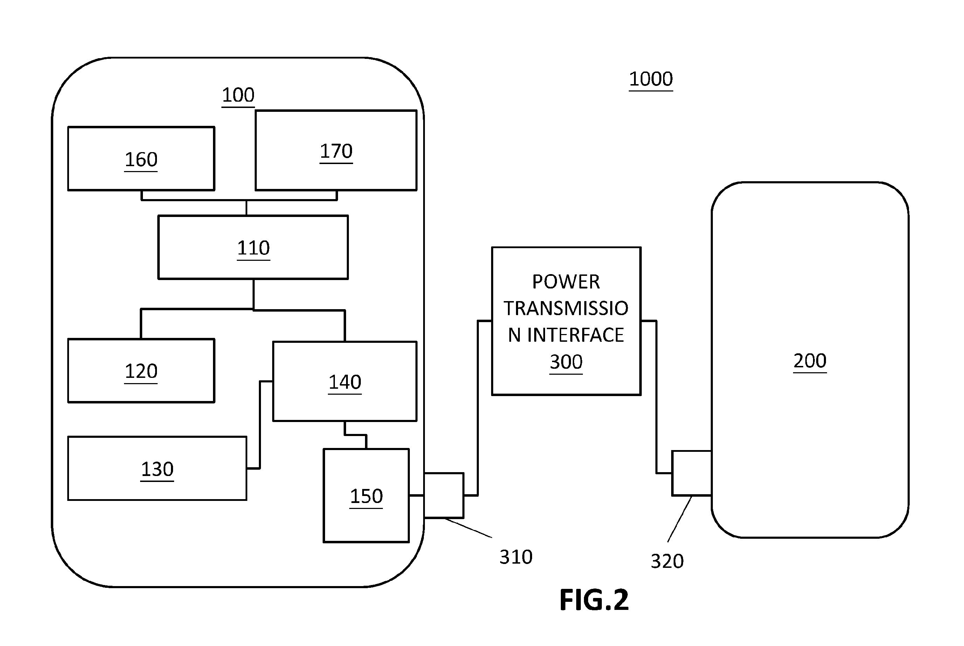

FIGS. 1 and 2 show a charging and discharging system 1000 that, according to the first embodiment of the present disclosure, is operative to charge power to, or obtain power from, a second portable electronic device 200.

Referring to FIGS. 1 and 2, the charging and discharging system 1000 includes a first portable electronic device 100 and a power transmission interface 300.

The first portable electronic device 100, or the second portable electronic device, may be, but not limited to, a laptop PC, a GPS device, a mobile phone, or a smartphone.

The first portable electronic device 100, as shown in FIGS. 1 and 2, at least includes a first data processing module 110, a first memory module 120, a first internal power reservoir 130, a first power management module 140, and a first power transmission port 150.

The first data processing module 110 is used for processing data and controls the first power management module 140 so as to determine the direction of current passing the first power management module 140. The first memory module 120 electrically connects to the first data processing module 110 and stores a setting for charging management. The first internal power reservoir 130 supplies power to the first data processing module 110 and the first memory module 120. The first internal power reservoir 130 may be a secondary battery or a super capacitor.

The first power management module 140 is disposed between the first power transmission port 150 and the first internal power reservoir 130 and is used for detecting the power capacity of the first internal power reservoir 130.

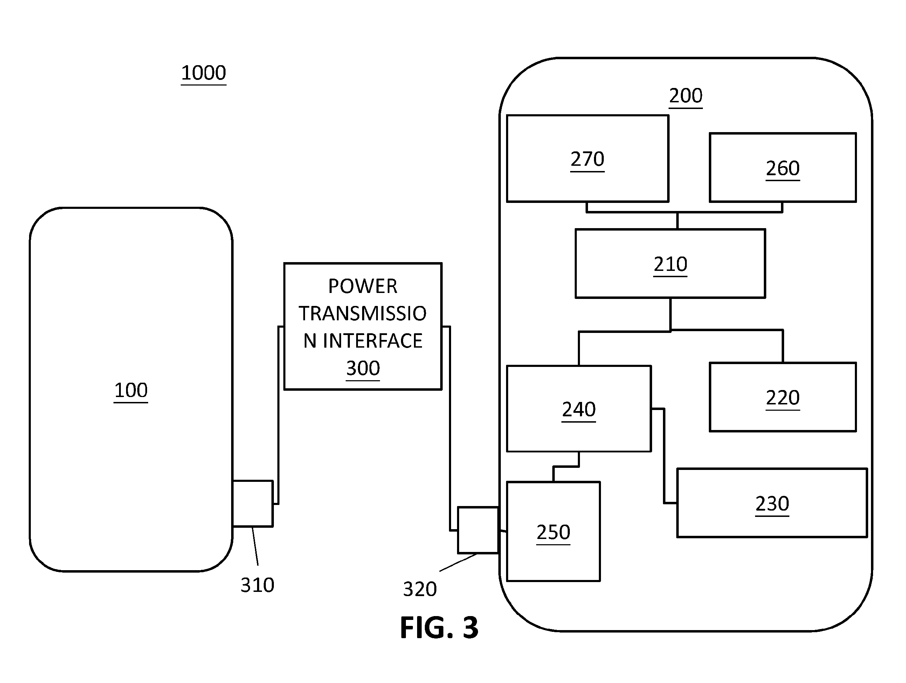

Referring to FIG. 3, with reference to FIG. 1, the second portable electronic device 200 at least includes a second data processing module 210, a second memory module 220, a second internal power reservoir 230, a second power management module 240, and a second power transmission port 250. The second portable electronic device 200 is structurally similar to the first portable electronic device 100, only differs in the device model number, and therefore the two devices are substantially interchangeable. The first portable electronic device 100 can be distinguished from the second portable electronic device 200 as a master or slave when power charging takes place.

In one embodiment, the first portable electronic device 100 further includes a first communication module 160 and a first input/output interface 170, both in communication with the first data processing module 110. The first communication module 160 complies to, but not limited to, 802.11 wireless protocol, Bluetooth protocol, or mobile communication protocol, such as GSM, GPRS, CDMA, HSDPA, LTE, and WiMAX. The first input/output interface 170 includes an input device and an output device. The input device may include a keyboard, a touch panel, or a microphone, and the output device may include, but not limited to, a screen, light indicators, or an audio output unit. The second portable electronic device 200 includes a second communication module 260 and a second input/output interface 270, which have the same function as the first communication module 160 and the first input/output interface 170, respectively.

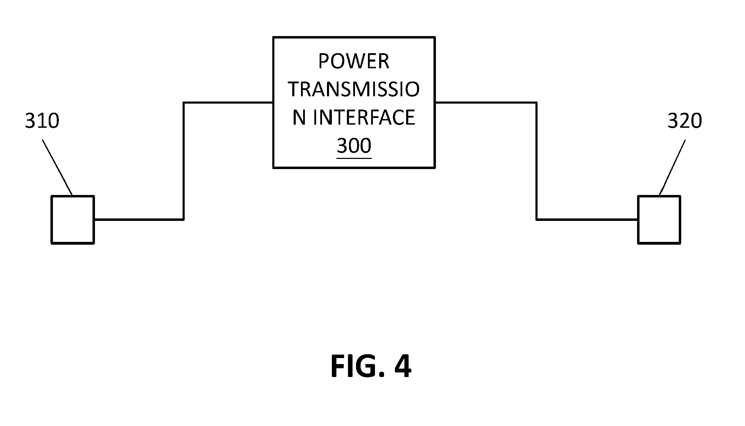

Referring to FIGS. 1-4, the power transmission interface 300 includes a first power node 310 and a second power node 320. The first power node 310 establishes a power transmission connection to the first portable electronic device 100. Specifically, the first power node 310 establishes the power transmission connection to, via the first power transmission port 150, the first internal power reservoir 130 of the first portable electronic device 100. The second power node 320 establishes a power transmission connection to the second portable electronic device 200. Specifically, the second power node 320 establishes the power transmission connection to, via the second power transmission port 250, the second internal power reservoir 230 of the second portable electronic device 200. In the present embodiment, the power transmission interface 300 is a conductive wire, and the first power node 310 and the second power node 320 are a first electrical connector and a second electrical connector, respectively.

The first power management module 140 is controlled by the first data processing module 110 to determine that the current passing the first power management module 140 is from the first power node 310 to the first internal power reservoir 130 or from the first internal power reservoir 130 to the first power node 310.

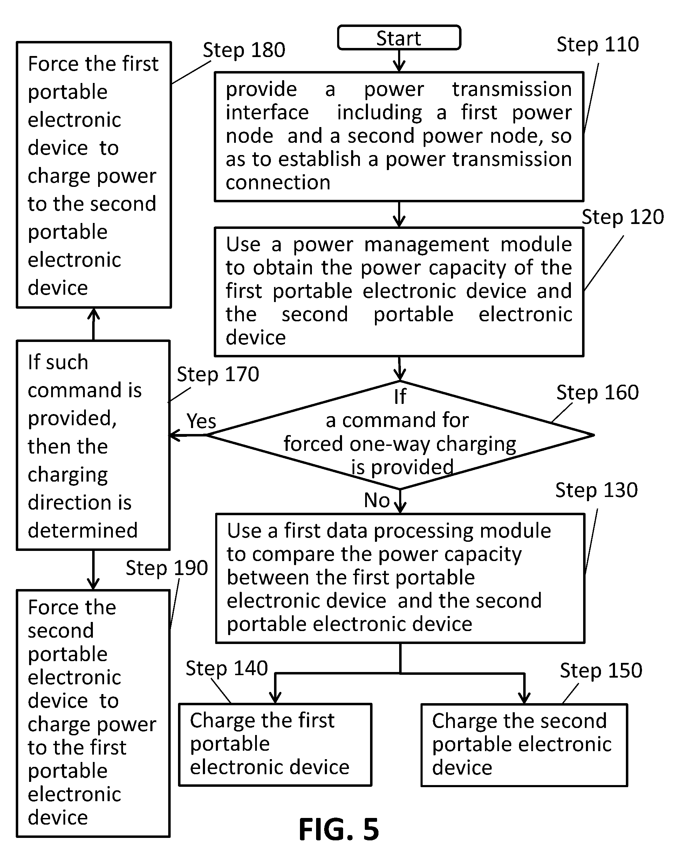

Referring to FIG. 5, the present disclosure further provides a charging and discharging method according to the present embodiment. This method applies to the first portable electronic device 100 so as to charge power to, or obtain power from, the second portable electronic device 200.

Referring to FIGS. 1-4, the charging and discharging method first provides a power transmission interface 300 including a first power node 310 and a second power node 320, so as for the first power node 310 to establish a power transmission connection to the first portable electronic device 100 and for the second power node 320 to establish a power transmission connection to the second portable electronic device 200 (Step 110).

Next, use a power management module to obtain the power capacity of the first portable electronic device 100 and the second portable electronic device 200 (Step 120). The power management module may be the first power management module 140 of the first portable electronic device 100 or the power management module integrated in the power transmission interface 300.

Next, use a first data processing module 110 to compare the power capacity between the first portable electronic device 100 and the second portable electronic device 200 (Step 130).

If the power capacity of the first portable electronic device 100 is less than that of the second portable electronic device 200, the first power management module 140, controlled by the first data processing module 110, determines that the current passing the first power management module 140 is from the first power node 310 so as to charge the first portable electronic device 100 (Step 140).

If the power capacity of the first portable electronic device 100 is more than that of the second portable electronic device 200, the first power management module 140, controlled by the first data processing module 110, determines that the current passing is from the first power node 310 of the first portable electronic device 100 to the second power node 320 so as to charge the second portable electronic device 200 (Step 150).

The charging and discharging method further includes, before Step 130, a step to determine if a command for forced one-way charging is provided (Step 160). If such command is provided, then the charging direction is determined (Step 170) to either force the first portable electronic device 100 to charge power to the second portable electronic device 200 (Step 180) or force the second portable electronic device 200 to charge power to the first portable electronic device 100 (Step 190).

To facilitate the charging process, the power management module can be used to increase the current passing by to a higher level than the first internal power reservoir 130 or the second internal power reservoir 230.

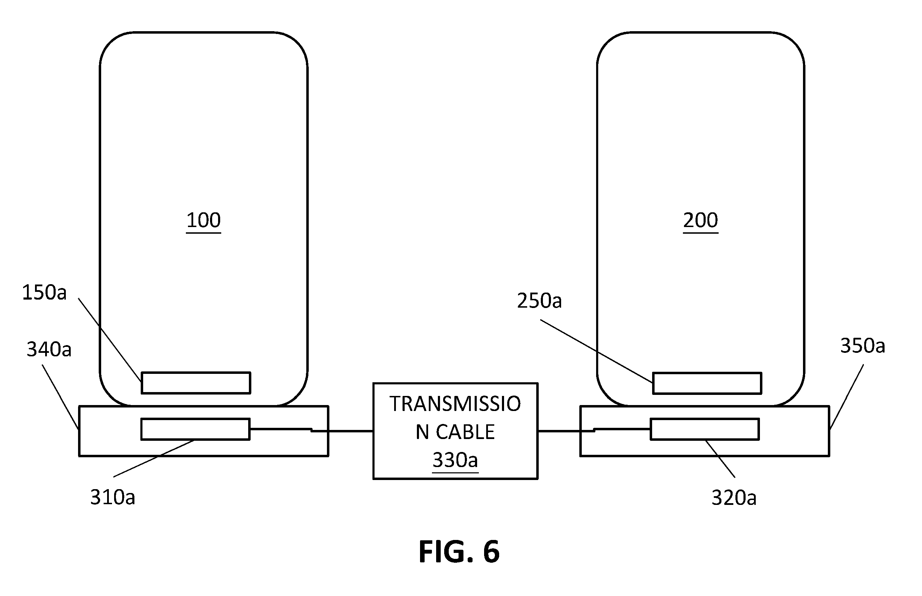

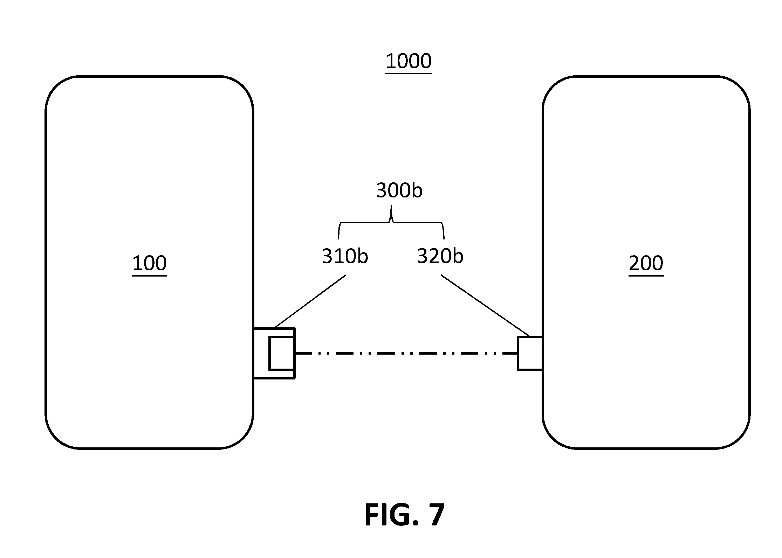

FIGS. 6 and 7 show a power transmission interface 300, according to the second embodiment of the present disclosure, which is applicable to the charging and discharging system 1000.

The power transmission interface 300 of the second embodiment includes a transmission cable 330a, a first wireless charging dock 340a, and a second wireless charging dock 350a.

The first wireless charging dock 340a provides a space on which the first portable electronic device 100 can be placed and includes a first inductive coil 310a.

The second wireless charging dock 350a, on which the second portable electronic device 200 is placed, includes a second inductive coil 320a serving as the second power node. The first inductive coil 310a is in communication with the second inductive coil 320a via the transmission cable 330a.

The first portable electronic device 100 and the second portable electronic device 200 further include a device inductive coil 150a and a device inductive coil 250a, respectively. The device inductive coil 150a and the device inductive coil 250a serve as the first power transmission port and the second power transmission port, respectively, and induce respectively the first inductive coil 310a and the second inductive coil 320a to generate induction current.

FIG. 7 shows a power transmission interface 300b, according to the third embodiment of the present disclosure, which is applicable to the charging and discharging system 1000.

The power transmission interface 300b includes a first electrical connector 310b and a second electrical connector 320b. The first electrical connector 310b, serving as the first power node, is disposed on the first portable electronic device 100. The second electrical connector 320b, serving as the second power node, is disposed on the second portable electronic device 200. The first electrical connector 310b can be coupled connected to the second electrical connector 320b.

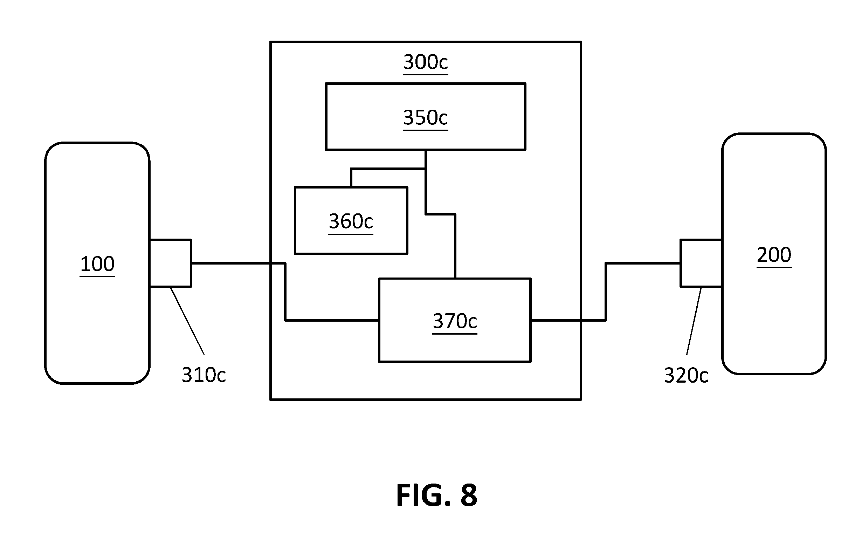

FIG. 8 shows a power transmission interface 300c, according to the fourth embodiment of the present disclosure, which is applicable to the charging and discharging system 1000. The power transmission interface 300c provides power charging to either the first portable electronic device 100 or the second portable electronic device 200. Unlike other embodiments, the power transmission interface 300c of the present embodiment serves as a controller to initiate the charging process.

The power transmission interface 300c includes a first power node 310, a second power node 320c, a data processing module 350c, a memory module 360c, and a power management module 370c.

The first power node 310c establishes a power transmission connection to the first internal power reservoir 130. The second power node 320c establishes a power transmission connection to the second internal power reservoir 230c.

The data processing module 350c is used for processing data. The memory module 360c electrically connects to the data processing module 350c and stores a setting for charging management. The power management module 370c, electrically connected to the first power node 310c and the second power node 320c, is used for detecting the power capacity of the first internal power reservoir 130 and the internal power reservoir 230. The function of the first power node 310c and the second power node 320c of the present embodiment is the same as described in other embodiments.

The power management module 370c, controlled by the data processing module 350c, determines that current passing is from the first internal power reservoir 130 to the second internal power reservoir 230 or from the second internal power reservoir 230 to the first internal power reservoir 130.

In the present embodiment, the power transmission interface 300c serves as a controller to initiate the charging process. Therefore, structural change on the first portable electronic device 100 and the second portable electronic device 200 is not necessary.

The above embodiments of the disclosed system, method, and the power transmission interface for charging and discharging among two portable electronic devices show that the present disclosure not only serves as an emergency backup power among two portable electronics, but effectively utilizes power in a fully-charged portable electronic device but not in use.

## Claims

1. A charging and discharging system, used for charging power to, or obtaining power from, a second portable electronic device , said system **characterized by** comprising:
a power transmission interface (300), including a first power node (310) and a second power node (320), said second power node (320) establishing a power transmission connection to said second portable electronic device (200); and
a first portable electronic device (100), at least including:
a first data processing module (110), used for processing data;
a first memory module (120), electrically connected to said first data processing module (110), storing a setting for charging management;
a first internal power reservoir (130), used for providing power to said first data processing module (110) and said first memory module (120); and
a first power management module (140) and a first power transmission port (150), wherein said first power management module (140) is disposed between said first power transmission port (150) and said first internal power reservoir (130) and is used for detecting the power capacity of said first internal power reservoir (130), and said first power transmission port (150) establishes a power transmission connection to said first power node (310);
wherein said first power management module (140), controlled by said first data processing module (110), determines that a current passing said first power management module (140) is from said first power node (310) to said first internal power reservoir (130) or from said first internal power reservoir (130) to said first power node (310).

2. The system as of claim 1, **characterized in that** said power transmission interface (300) is a conductive wire, and said first power node (310) and said second power node (320) are a first electrical connector (310b) and a second electrical connector (320b), respectively.

3. The system as of claim 1, said power transmission interface **characterized by** comprising:
a transmission cable (330a);
a first wireless charging dock (340a), on which said first portable electronic device (100) is placed, including a first inductive coil (310a) serving as said first power node (310); and
a second wireless charging dock (350a), on which said second portable electronic device (100) is placed, including a second inductive coil (320a) serving as said second power node (320), said first inductive coil (310a) electrically connecting to said second inductive coil (320a) via said transmission cable (330a);
wherein said first portable electronic device (100) further includes a device inductive coil (150a) serving as said first power transmission port (150), and said device inductive coil (150a) and said first inductive coil (310a) magnetically induce each other.

4. The system as of claim 1, said power transmission interface **characterized by** comprising:
a first electrical connector (310b), serving as said first power node (310), being disposed on said first portable electronic device (100); and
a second electrical connector (320b), serving as said second power node (320), being disposed on said second portable electronic device (200);
wherein said first electrical connector (310b) is used to connect to said second electrical connector (320b).

5. A charging and discharging method, applicable to a first portable electronic device, used for charging power to, or obtaining power from, a second portable electronic device, said method **characterized by** comprising:
providing a power transmission interface (300) including a first power node (310) and a second power node (320), wherein said first power node (310) establishes a power transmission connection to said first portable electronic device (100), and
said second power node (320) establishes a power transmission connection to said second portable electronic device (200);
obtaining the power capacity of said first portable electronic device (100) and said second portable electronic device (200) by a power management module (140); and
comparing the power capacity between said first portable electronic device (100) and said second portable electronic device (200) by a first data processing module (110);
wherein:
if the power capacity of said first portable electronic device (100) is less than that of said second portable electronic device (200), said first power management module (140), controlled by said first data processing module (110), determining that a current passing said first power management module (140) is from said first power node (310c) so as to charge the first portable electronic device (100); and
if the power capacity of said first portable electronic device (100) is more than that of said second portable electronic device (200), said first power management module (140), controlled by said first data processing module (110), determining that a current passing is from said first power node (310c) to said second power node (320c) so as to charge the second portable electronic device (200).

6. The method as of claim 5, **characterized by** further comprising determining if a command for forced one-way charging is provided; and wherein if said command is provided, forcing said first portable electronic device (100) to charge power to said second portable electronic device (200).

7. The method as of claim 5, **characterized by** further comprising determining if a command for forced one-way receiving is provided; and wherin if said command is provided, forcing said second portable electronic device (200) to charge power to said first portable electronic device (100).

8. A power transmission interface, used for providing charging and discharging between a first portable electronic device and a second portable electronic device, said first portable electronic device and said second portable electronic device including a first internal power reservoir and a second internal power reservoir, respectively, said power transmission interface **characterized by** comprising:
a first power node (310c), used for establishing a power transmission connection to said first internal power reservoir (130);
a second power node (320c), used for establishing a power transmission connection to said second internal power reservoir (230);
a data processing module (350c), used for processing data;
a memory module (360c), electrically connecting to said data processing module (350c), storing a setting for charging management; and
a power management module (370c), electrically connecting to said first power node (310c) and said second power node (320c), used for detecting the power capacity of said first internal power reservoir (130) and said second internal power reservoir (230);
wherein said power management module (370c), controlled by said data processing module (350c), determines a current passing from said first internal power reservoir (130) to said second internal power reservoir (230) or passing from said second internal power reservoir (230) to said first internal power reservoir (130).

9. The power transmission interface as of claim 8, **characterized in that** said first power node (310) and said second power node (320) are a first electrical connector (310b) and a second electrical connector (320b), respectively.

10. The power transmission interface as of claim 8, said power transmission interface **characterized by** comprising:
a first wireless charging dock (340a), on which said first portable electronic device (100) is placed, including a first inductive coil (310a) serving as the first power node (310); and
a second wireless charging dock (350a), on which said second portable electronic device (200) is placed, including a second inductive coil (320a);
wherein said first portable electronic device (100) and said second portable electronic device (200) each further includes a device inductive coil (150a, 250a), and said device inductive coils (150a, 250a) magnetically induce said first inductive coil (310a) and said second inductive coil (320a), respectively.
